**Europäisches Patentamt**

**European Patent Office**

**Office européen des brevets**

(19)

(11) Veröffentlichungsnummer: **0 149 766**
**B1**

(12) **EUROPÄISCHE PATENTSCHRIFT**

(45) Veröffentlichungstag der Patentschrift:
29.06.88

(51) Int. Cl.⁴: **H 04 B 7/17**

(21) Anmeldenummer: **84114557.6**

(22) Anmeldetag: **30.11.84**

(54) Einrichtung zum Rahmenaufbau auf der Sendeseite bzw. Rahmenabbau auf der Empfangsseite für eine digitale Richtfunkübertragungsstrecke.

(30) Priorität: **13.01.84 DE 3400965**

(43) Veröffentlichungstag der Anmeldung:
**31.07.85 Patentblatt 85/31**

(45) Bekanntmachung des Hinweises auf die Patenterteilung:
**29.06.88 Patentblatt 88/26**

(84) Benannte Vertragsstaaten:
**AT CH DE FR GB IT LI NL**

(56) Entgegenhaltungen:
**US-A-4 214 206**

**ELEKTRISCHES NACHRICHTENSYSTEM, Band 57,
no.3, 1983, Otto Grewe, Stuttgart, H.D. BRUDY u.
K.D. HOPF "Digital-Richtfunksystem für den
Einsatz im Bezirknetz", S. 265-270
F. FREY "Digital-Richtfunksysteme zur
Übertragung mit 34 Mbit/s", S. 215-221
IEEE JOURNAL OF SOLID-STATE CIRCUITS, Band
SC-14, no. 6, Dezember 1979, New York, B.J.
WHITE, G.M. JACOBS u. G.F. LANDSBURG "A
Monolithic Dual Tone Multifrequency Receiver", S.
991-997**

(73) Patentinhaber: **ANT Nachrichtentechnik GmbH,
Gerberstrasse 33, D-7150 Backnang (DE)**

(72) Erfinder: **Hegny, Helmut, Dipl.- Ing., Stuttgarter
Strasse 89, D-7150 Backnang (DE)**
Erfinder: **Mönch, Detlef, Dipl.- Ing., Elly- Heuss-
Knapp- Weg 19, D-7150 Backnang (DE)**

**Beschreibung**

Die Erfindung betrifft eine Einrichtung zum Rahmenaufbau auf der Sendeseite bzw. Rahmenabbau auf der Empfangsseite für eine digitale Richtfunkübertragungsstrecke gemäß Oberbegriff Anspruch 1.

Solche Einrichtungen sind bekannt geworden durch die Aufsätze "Digital-Richtfunksystem für den Einsatz im Bezirksnetz" von Brudy u. Hopf und "Digital-Richtfunksystem zur Übertragung mit 34 Mbit/s" von Frey in Elektrisches Nachrichtenwesen, Band 57, Nr. 3, 1983, Seiten 265-270 bzw. 215-221.

Um Digitalsignale sicher über Richtfunkstrecken übertragen zu können, wird auf der Sendeseite der Datenstrom in einen eigenen Überrahmen, der zusätzliche Information enthält, eingefügt. Diese Zusatzbits enthalten gewöhnlich ein Synchronwort zur Synchronisation des Empfängers, sowie eine RF-Kanalkennung, digitale Dienstkanäle, Meldebits und Paritätsbits zur Fehlerratenüberwachung. Außerdem wird der Datenstrom verscrambelt, um auch bei Übertragung einer Dauerlage (z. B. AIS) möglichst noch das Spektrum einer Zufallsfolge zu erhalten. Abschließend wird das Datensignal noch im Phasensummenrechner entsprechend der gewählten Modulationsart codiert. Auf der Empfangsseite werden alle diese Maßnahmen wieder rückgängig gemacht, d. h. Decodierung des Demodulatorsignals im Phasendifferenzrechner (Descrambelung und Extraktion der Zusatzbit). Alle diese Vorgänge werden jeweils von einem Rahmenzähler gesteuert.

In den Geräten der unteren Hierarchiestufen bis zu Übertragungsraten von 34 Mbit/s wurden nun für die vier verschiedenen Betriebszustände Sender- bzw. Empfänger End- und Zwischenstelle jeweils eine eigene Schaltung mit diskreten Bauelemente aufgebaut.

Diese Schaltungen sind aber für höhere Übertragungsgeschwindigkeiten nicht geeignet. Außerdem ist der Energieverbrauch relativ hoch und damit die Geräteerwärmung erheblich.

Der Erfindung liegt die Aufgabe zugrunde, eine Einrichtung der eingangs genannten Art anzugeben, die höhere Übertragungsgeschwindigkeiten verarbeiten kann und sowohl als Sender wie auch als Empfänger in einer End- oder Zwischenstelle betrieben werden kann.

Die Aufgabe wird gelöst wie im Kennzeichen des Anspruchs 1 beschrieben. Die Unteransprüche geben vorteilhafte Ausgestaltungen an.

Im folgenden wird die Erfindung an einem Ausführungsbeispiel mit Hilfe von Figuren näher erläutert.

Fig. 1   zeigt den erfindungsgemäßen Aufbau der für den Sendebetrieb notwendigen Baugruppen mit den dazu notwendigen Ein- und Ausgängen.

Fig. 2   zeigt den erfindungsgemäßen Aufbau der für den Empfangsbetrieb notwendigen Baugruppen mit den dazu notwendigen Ein- und Ausgängen.

In den Figuren nicht eingezeichnet ist der Eingang SE. Mit dem am Eingang SE angelegten Signal "1" oder "0" wird die Einrichtung entweder auf Sendebetrieb oder Empfangsbetrieb festgelegt.

Vorteile der erfindungsgemäßen Einrichtung sind:
- Es ist eine sehr hohe Übertragungsgeschwindigkeit verarbeitbar;
- es ist eine raumsparende Bauweise möglich;
- es ist ein geringerer Schnittstellenaufwand notwendig;
- der Energieverbrauch ist sehr gering und damit wird die Geräteerwärmung reduziert;
- da ein Universalbaustein für sechs verschiedene Betriebsarten verwendet wird, ist der Prüfaufwand erheblich reduziert, da eine geringere Typenzahl vorliegt;
- das Gerät wird servicefreundlicher.

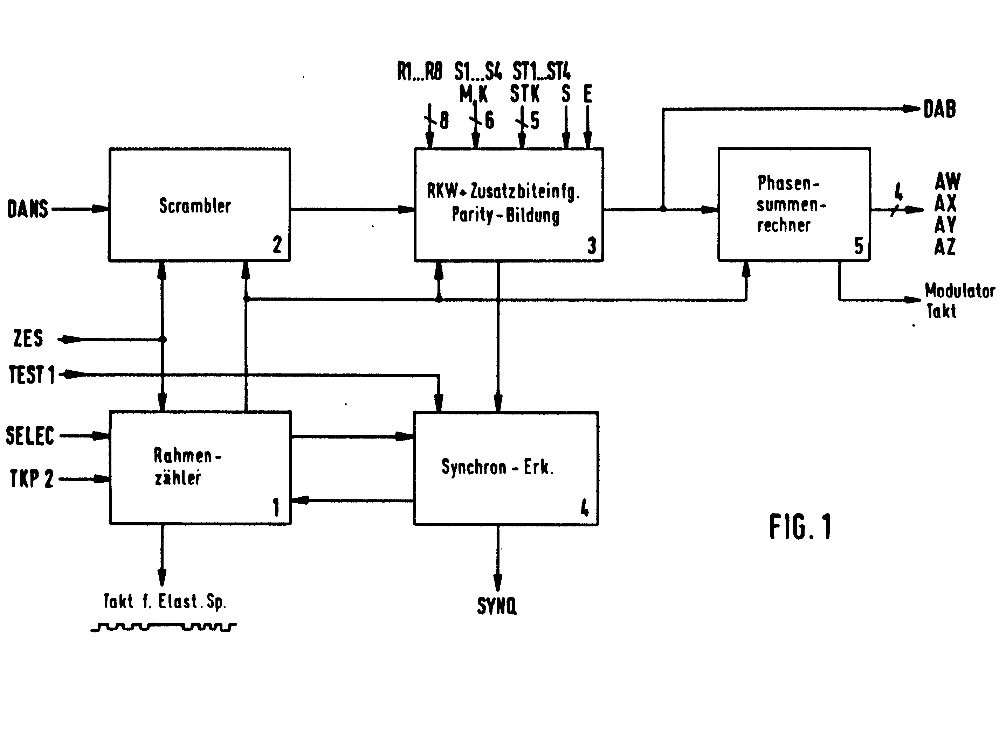

Um die Einrichtung auf die Betriebsart Sendebetrieb einer Endstelle (Fig. 1, Anspruch 2) festzulegen, muß am Eingang SE das Signal "0" angelegt sein. Damit werden die internen Leitungsverbindungen unter den Baugruppen und innerhalb der Baugruppen hergestellt und die notwendigen Baugruppen aktiviert bzw. die überflüssigen Baugruppen abgeschaltet. Die Nutzdaten werden in der Scrambler-Baugruppe verwürfelt und anschließend in der Zusatzbiteinfügungs-Baugruppe mit Synchronwort (Rahmenkennwort), Paritätsbits und Dienstkanalsignalen versehen.

Die so aufbereiteten Nutzdaten werden in der Phasensummenrechner-Baugruppe in vier Bitströme umgerechnet, die dann einem Modulator zugeführt werden. Die Rahmenzähler-Baugruppe steuert den zeitlichen Ablauf der Scrambler-Baugruppe, der Zusatzbiteinfügungs-Baugruppe und der Phasensummenrechner-Baugruppe. Außerdem erzeugt die Rahmenzähler-Baugruppe den mit Lücken versehenen Takt für den elastischen Speicher. Die Lücken im Nutzdatenstrom, die somit beim Auslesen des elastischen Speichers entstehen, werden mit den Zusatzbits aufgefüllt. Die Synchronworterkennungs-Baugruppe wird auf der Sendeseite nicht benötigt und wird deshalb mit Hilfe des Signals "1" am Eingang TEST1 abgeschaltet.

Um die Einrichtung auf die Betriebsart Sendebetrieb einer Zwischenstelle (Fig. 1, Anspruch 3) festzulegen, muß am Eingang SE ebenfalls das Signal "0" angelegt sein. Die Nutzdaten sollen dabei unverändert weitergereicht werden, d. h. die Scrambler-Baugruppe soll nicht verwürfeln und die Zusatzbiteinfügungs-Baugruppe soll keine Zusatzbits einfügen. Außerdem sollen keine Lücken im Takt für den elastischen Speicher sein. Dies alles wird dadurch erreicht, daß an den Eingängen E, S, ZES, TEST1, jeweils das Signal "1" angelegt ist. An den Eingängen STv kann dabei ein beliebiges Signal anliegen.

Für den Sendebetrieb in einer Zwischenstelle ist die Einrichtung auf eine weitere Betriebsart einstellbar (Fig. 1, Anspruch 4). Und zwar soll es möglich sein, daß auch in einer Zwischenstelle Zusatzbits in den Nutzdatenstrom eingefügt werden können. Dazu ist es notwendig, daß die Zwischenstelle auf den Rahmen synchronisiert wird, d. h. die Synchronworterkennungs-Baugruppe muß mit dem Signal "0" am Eingang TEST1 aktiviert werden. Auf diese Weise können beispielsweise Gespräche über Dienstkanale von Zwischenstelle zu Zwischenstelle geführt werden.

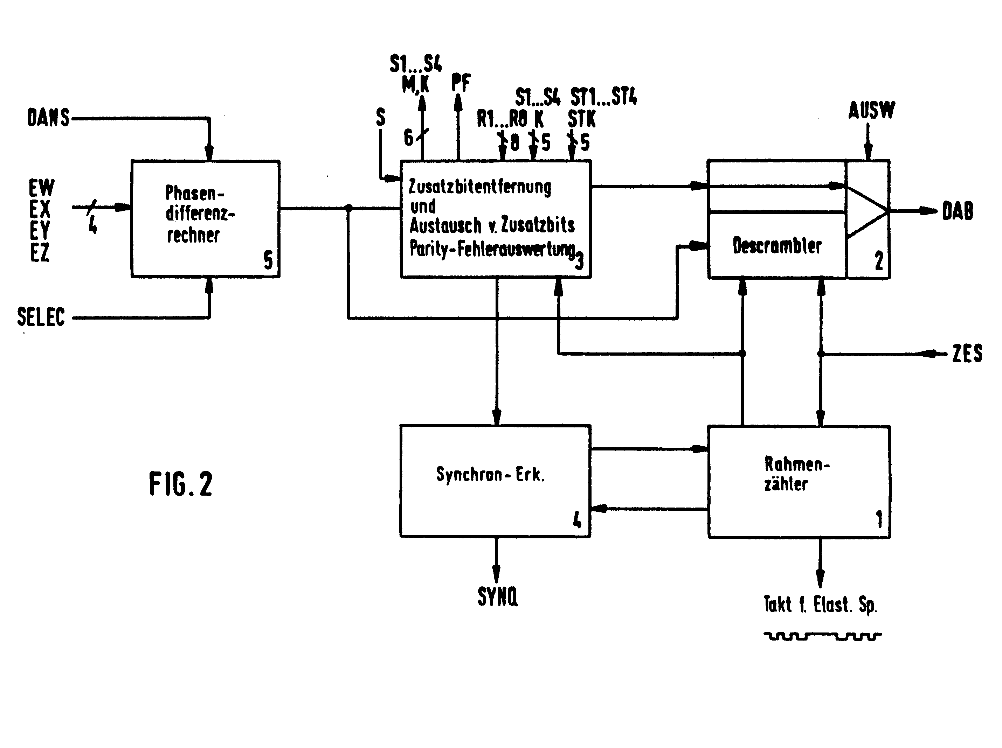

Um die Einrichtung auf die Betriebsart Empfangsbetrieb einer Endstelle (Fig. 2, Anspruch 5) festzulegen, muß am Eingang SE das Signal "1" angelegt sein. Die Nutzdaten werden dann über die Eingänge EW, EX, EY und EZ, der Phasendifferenzrechner-Baugruppe zugeführt, die von außen über den Eingang SELEC gesteuert ist und aus den vier parallelen Nutzdatenströmen wieder einen seriellen Nutzdatenstrom erzeugt. Dieser Nutzdatenstrom wird einerseits der Zusatzbitentfernungs-Baugruppe und andererseits dem Descrambler zugeführt. In der Zusatzbitentfernungs-Baugruppe werden aufgrund des Signales "1" am Eingang S bestimmte Zusatzbits (S1, ... S4, K, M) aus dem Nutzdatenstrom entfernt und die Paritätsfehlererkennung durchgeführt.

Mit dem Signal "0" am Eingang ZES wird die Rahmenzähler-Baugruppe veranlaßt, den Takt für den elastischen Speicher mit Lücken zu erzeugen, und die Descrambler-Baugruppe veranlaßt die Nutzdaten zu entwürfeln. An den Descrambler schließt sich außerhalb des Halbleiterchips der elastische Speicher an, der mit dem lückenhaften Takt den Nutzdatenstrom einliest und damit alle Zusatzbits entfernt.

Um die Einrichtung auf die Betriebsart Empfangsbetrieb einer Zwischenstelle (Fig. 2, Anspruch 6) festzulegen, muß am Eingang SE ebenfalls das Signal "1" angelegt sein. Aufgrund des Signales "0" am Eingang S können bestimmte Zusatzbits in den Nutzdatenstrom eingefügt oder belassen werden. Mit Hilfe des Signales "1" am Eingang ZES erzeugt der Rahmenzähler den Takt für den elastischen Speicher ohne Lücken. An dem Auswahl-Eingang AUSW liegt das Signal "1", sodaß die Nutzdaten nicht über den Descrambler an den Ausgang DAB geführt werden.

In der Betriebsart Empfangsbetrieb ist eine weitere Ausführung vorgesehen, in der ein außerhalb des Halbleiterchips liegender Phasendifferenzrechner-Baustein zur Anwendung kommen könnte. Dazu werden an die Eingänge EW, EX, EY und EZ das Signal "0" angelegt. Die außerhalb aufbereiteten Nutzdaten werden dann über den Eingang DANS der Einrichtung zugeführt.

## Patentansprüche

1. Einrichtung zum Rahmenaufbau auf der Sendeseite bzw. Rahmenabbau auf der Empfangsseite für eine digitale Richtfunkübertragungsstrecke, bei der Zusatzbits in Form von Synchronwort, Paritätsbits und Dienstkanalbits hinzugefügt bzw. entfernt werden und wobei die Einrichtung aus einer Scrambler- bzw. Descrambler-Baugruppe (2), einer Zusatzbiteinfügungs- bzw. Zusatzbitentfernungs-Baugruppe (3), einer Phasensummenrechner- bzw. Phasendifferenzrechner-Baugruppe (5), einer Synchronworterkennungs-Baugruppe (4) und einer Rahmenzählerbaugruppe (1) aufgebaut ist, dadurch gekennzeichnet, daß die Einrichtung auf einem Halbleiterchip integriert ist, der alle genannten Baugruppen enthält, und daß durch Anlegen bestimmter Signale ("0" oder "1") einzelne Baugruppen ein- bzw. ausschaltbar sind, wodurch die Einrichtung sowohl als Sender wie auch als Empfänger in einer End- oder Zwischenstelle betrieben werden kann.

2. Einrichtung nach Anspruch 1, dadurch gekennzeichnet, daß im Sendebetrieb einer Endstelle die Nutzdaten über einen ersten Eingang (DANS) direkt der Scrambler-Baugruppe zugeführt sind, und am 18-ten Eingang das Signal "0" angelegt ist und damit die Einrichtung auf Sendebetrieb festgelegt ist, daß die verwürfelten Nutzdaten der Zusatzbiteinfügungs-Baugruppe zugeführt sind, daß die dort aufbereiteten Nutzdaten der Phasensummenrechner-Baugruppe zugeführt sind, in der die Daten in vier parallele Nutzdatenströme umgerechnet werden, die an dem ersten bis vierten Ausgang (AW, AX, AY und AZ) anliegen, daß an einem weiteren fünften Ausgang der von der Phasensummenrechner-Baugruppe erzeugte Modulatortakt anliegt, daß der zeitliche Ablauf der bisher genannten Baugruppen von der Rahmenzähler-Baugruppe gesteuert ist, daß die Rahmenzähler-Baugruppe außerdem den mit Lücken versehenen Takt für den außerhalb des Halbleiterchips liegenden elastischen Speicher erzeugt, daß dieser Takt mit Hilfe der an den zweiten Eingängen (SELEC) und drittem Eingang (TKP2) anliegenden Signale verschiebbar ist, daß am vierten Eingang (TEST1) das Signal "1" anliegt und damit die Synchronworterkennungs-Baugruppe abgeschaltet ist, daß am fünften Eingang (ZES) das Signal "0" anliegt und damit bewirkt wird, daß die Scrambler-Baugruppe die Nutzdaten verwürfelt und die Rahmenzähler-Baugruppe die Lücken im Takt für den elastischen Speicher erzeugt, daß am sechsten Eingang (E) das Signal "0" anliegt und damit die Zusatzbiteinfügungs-Baugruppe veranlaßt wird, die Zusatzbits (S1 ... S4, M, K, R1 ... R8) und das Paritybit einzufügen.

3. Einrichtung nach Anspruch 1, dadurch gekennzeichnet, daß im Sendebetrieb einer Zwischenstelle am 18-ten Eingang (SE) das Signal "0" angelegt ist und damit die Einrichtung auf Sendebetrieb festgelegt ist und die über den ersten Eingang (DANS) zugeführten Nutzdaten unverändert durch die Scrambler-Baugruppe und die Zusatzbiteinfügungs-Baugruppe geführt sind und am sechsten Ausgang (DAB) wieder anliegen, daß am sechsten Eingang (E) und am siebten Eingang (S) das Signal "1" angelegt ist und damit verhindert wird, daß Zusatzbits eingefügt werden, daß am fünften Eingang (ZES) das Signal "1" angelegt ist und damit die Rahmenzähler-Baugruppe den Takt für den elastischen Speicher ohne Lücken abgibt und den Scrambler veranlaßt, die Nutzdaten nicht zu verwürfeln, daß am vierten Eingang (TEST1) das Signal "1" angelegt ist und damit die Synchronworterkennungs-Baugruppe abgeschaltet ist.

4. Einrichtung nach Anspruch 1 und 3, dadurch gekennzeichnet, daß im Sendebetrieb einer Zwischenstelle mit Synchronisierung am 18-ten Eingang (SE) das Signal "0" angelegt ist und damit die Einrichtung auf Sendebetrieb festgelegt ist, daß am sechsten Eingang (E) das Signal "1" und am siebten Eingang (S) das Signal "0" angelegt ist und damit in Abhängigkeit von den am achten bis 12-ten Eingang (STv) anliegenden Signal "0" oder "1" bestimmte Zusatzbits (S1, ... S4, K) eingefügt oder belassen werden, daß am vierten Eingang (TEST1) das Signal "0" angelegt ist und damit die Synchronworterkennungs-Baugruppe eingeschaltet ist.

5. Einrichtung nach Anspruch 1, dadurch gekennzeichnet, daß im Empfangsbetrieb einer Endstelle am 18-ten Eingang (SE) das Signal "1" angelegt ist und damit die Einrichtung auf Empfangsbetrieb festgelegt ist und die Nutzdaten am 13-ten bis 16-ten Eingang (EW, EX, EY und EZ) angelegt sind, daß die Phasendifferenzrechner-Baugruppe von außen über den zweiten Eingang (SELEC) gesteuert ist und aus den vier parallelen Nutzdatenströmen wieder einen seriellen Nutzdatenstrom erzeugt, daß dieser Nutzdatenstrom einerseits der Descrambler-Baugruppe und andererseits der Zusatzbitentfernungs-Baugruppe zugeführt ist, daß am siebten Eingang (S) das Signal "1" angelegt ist und damit bestimmte Zusatzbits (S1,. .. S4, K, M) aus dem Nutzdatenstrom entfernt werden und die Parity Fehlererkennung durchgeführt wird, daß am fünften Eingang (ZES) das Signal "0" angelegt ist und damit die Rahmenzähler-Baugruppe den Takt für den elastischen Speicher mit Lücken abgibt und den Descrambler veranlaßt, die Nutzdaten zu entwürfeln, daß am 17-ten Eingang (AUSW) das Signal "0" angelegt ist und damit die entwürfelten Nutzdaten am sechsten Ausgang (DAB) anliegen.

6. Einrichtung nach Anspruch 1, dadurch gekennzeichnet, daß im Empfangsbetrieb einer Zwischenstelle am 18-ten Eingang (SE) das Signal "1" angelegt ist und damit die Einrichtung auf Empfangsbetrieb festgelegt ist und die Nutzdaten am 13-ten bis 16-ten Eingang (EW, EX, EY und EZ) angelegt und der Phasendifferenzrechner-Baugruppe zugeführt sind, daß die Phasendifferenzrechner-Baugruppe von außen über den zweiten Eingang (SELEC) gesteuert ist und aus den vier parallelen Nutzdatenströmen wieder einen seriellen Nutzdatenstrom erzeugt, daß am siebten Eingang (S) das Signal "0" angelegt ist und damit in Abhängigkeit von den am achten bis 12-ten Eingang (STv) anliegenden Signal "0" oder "1" bestimmte Zusatzbits (S1, ... S4, K) eingefügt oder belassen werden, daß am fünften Eingang (ZES) das Signal "1" angelegt ist und damit die Rahmenzähler-Baugruppe den Takt für den elastischen Speicher ohne Lücken abgibt, daß am 17-ten Eingang (AUSW) das Signal "1" angelegt ist und damit die Nutzdaten aus der Zusatzbitentfernungs-Baugruppe direkt dem sechsten Ausgang (DAB) zugeführt sind.

7. Einrichtung nach Anspruch 5 oder 6, dadurch gekennzeichnet, daß an den 13-ten bis 16-ten Eingängen (EW, EX, EY und EZ) das Signal "0" angelegt ist und damit die Phasendifferenzrechner-Baugruppe abgeschaltet ist und daß die außen durch einen anderen Phasendifferenzrechner-Baustein aufbereiteten Nutzdaten an dem ersten Eingang (DANS) angelegt sind.

## Claims

1. Equipment for the build-up of a frame at the transmitting end and for the split-up of a frame at the receiving end respectively for a digital directional radio transmission path, in which additional bits in the form of synchronising word, parity bits and service channel bits are added and removed respectively and wherein the equipment is built up from a scrambler or descrambler assembly (2), an additional bit insertion or removal assembly (3), a phase sum or phase difference calculator assembly (5), a synchronising word recognition assembly (4) and a frame counter assembly (1), characterised thereby, that the equipment is integrated on a semiconductor chip which contains all named assemblies and that individual assemblies are switchable on and off respectively through application of certain signals ("0" or "1"), whereby the equipment can be operated as transmitter as well as also as receiver at a terminal or intermediate station.

2. Equipment according to claim 1, characterised thereby, that in the transmitting operation of a terminal station, the intelligence data are supplied by way of a first input (DANS) directly to the scrambler assembly and the signal "0" is applied at the 18th input and the equipment is thereby locked to transmitting operation, that the scrambled intelligence data are supplied to the additional bit insertion assembly, that the intelligence data prepared there are supplied to the phase sum calculator assembly, in which the data are converted into four parallel intelligence data streams which are present at the first to fourth output (AW, AX, AY and AZ), that the modulator timing pulse produced by the phase sum calculator assembly is present at a further fifth output, that the temporal operating sequence of the hitherto named assemblies is controlled by the frame counter assembly, that the frame counter assembly beyond that generates the timing cycle, provided with gaps, for the elastic store lying outside the semiconductor chip, that this timing cycle is shiftable with the aid of the signals present at the second inputs (SELEC) and the third input (TKP2), that the signal "1" is present at the fourth input (TEST1) and the synchronising word recognition assembly is thereby switched off, that the signal "0" is present at the fifth input (ZES) and it is thereby effected that the scrambler assembly scrambles the intelligence data and the frame counter assembly generates the gaps in the timing cycle for the elastic store and that the signal "0" is present at the sixth input (E) and the additional bit insertion assembly is thereby caused to insert the additional bits (S1 ... S4, M, K, R1 ... R8) and the parity bit.

3. Equipment according to claim 1, characterised thereby, that in the transmitting operation of an intermediate station, the signal "0" is applied at the 18th input (SE) and the equipment is thereby locked to transmitting operation and the intelligence data supplied by way of the first input (DANS) are conducted unchanged through the scrambler assembly and the additional bit insertion assembly and are present again at the sixth output (DAB), that the signal "1" is applied at the sixth input (E) and at the seventh input (S) and it is thereby prevented that additional bits are inserted, that the signal "1" is applied at the fifth input and the frame counter assembly thereby delivers the timing cycle for the elastic store without gaps and causes the scrambler not to scramble the intelligence data and that the signal "1" is applied at the fourth input (TEST1) and the synchronising word recognition assembly is thereby switched off.

4. Equipment according to claim 1 and 3, characterised thereby, that in the transmitting operation of an intermediate station with synchronisation, the signal "0" is applied at the 18th input (SE) and the equipment is thereby locked to transmitting operation, that the signal "1" is applied at the sixth input (E) and the signal "0" is applied at the seventh input (S) and certain additional bits (S1, ... S4, K) are thereby inserted or allowed to remain in dependence on the signal "0" or "1" present at the eighth to twelfth input (STv) and that the signal "0" is applied at the fourth input (TEST1) and synchronising word recognition assembly is thereby switched on.

5. Equipment according to claim 1, characterised thereby, that in the receiving operation of a terminal station, the signal "1" is applied at the 18th input (SE) and the equipment is thereby locked to receiving operation and the intelligence are applied at the 13th to 16th input (EW, EX, EY and EZ), that the phase difference calculator assembly is controlled from outside by way of the second input (SELEC) and produces a serial intelligence data stream again from the four parallel intelligence data streams, that this intelligence data stream is conducted on the one hand to the descrambler assembly and on the other hand to the additional bit removal assembly, that the signal "1" is applied at the seventh input (S) and certain additional bits (S1,. .. S4, K) are thereby removed from the intelligence data stream and the parity error recognition is performed, that the signal "0" is applied at the fifth input (ZES) and the frame counter assembly thereby delivers the timing cycle for the elastic store without gaps and causes the descrambler to descramble the intelligence data and that the signal "0" is applied at the 17th input (AUSW) and the descrambled intelligence data are thereby present at the sixth output (DAB).

6. Equipment according to claim 1, characterised thereby, that in the receiving operation of an intermediate station, the signal "1" is applied at the 18th input (SE) and the equipment is thereby locked to receiving operation and the intelligence are applied at the 13th to 16th input (EW, EX, EY and EZ) and conducted to the phase difference calculator assembly, that the phase difference calculator assembly is controlled from outside by way of the second input (SELEC) and produces a serial intelligence data stream again from the four parallel intelligence data streams, that the signal "0" is applied at the seventh input (S) and certain additional bits (S1, ... S4, K) are thereby inserted or allowed to remain in dependence on the signal "0" or "1" present at the eighth to twelfth input (STv), that the signal "1" is applied at the fifth input (ZES) and the frame counter assembly thereby delivers the timing cycle for the elastic store without gaps, that the signal "1" is applied at the 17th input (AUSW) and the intelligence data from the additional bit removal assembly are thereby conducted directly to the sixth output (DAB).

7. Equipment according to claim 5 or 6, characterised thereby, that the signal "0" is applied at the 13th to 16th input (EW, EX, EY and EZ) and the phase difference calculator assembly is thereby switched off and that the intelligence data, prepared externally by another phase difference calculator block, are applied at the first input (DANS).

**Revendications**

1. Dispositif pour la composition de la trame côté émission et la décomposition de la trame côté réception dans le cas d'une liaison de transmission numérique par faisceau hertzien, avec insertion ou élimination de bits ajoutés sous forme d'un mot de synchronisation, de bits de parité et de bits de canal de service, dispositif qui comprend un ensemble embrouilleur ou débrouilleur (2), un ensemble d'insertion de bits ajoutés ou d'élimination de bits ajoutés (3), un calculateur totalisateur de phase ou de différence phase (5), un ensemble de reconnaissance de mot de synchronisation (4) et un ensemble compteur de trame (1), caractérisé en ce que le dispositif est intégré sur une pastille de matériau semi-conducteur, qui contient tous les ensembles mentionnés, et que différents ensembles peuvent être mis en service ou hors service par l'application de signaux déterminés ("0" ou "1"), de sorte que le dispositif est utilisable aussi bien en tant qu'émetteur qu'en tant que récepteur dans un équipement terminal ou dans un équipement intermédiaire.

2. Dispositif selon la revendication 1, caractérisé en ce que, en mode d'émission d'un équipement terminal, les données utiles sont appliquées directement à l'ensemble embrouilleur par une première entrée (DANS) et le signal "0" est appliqué à la dix-huitième entrée, ce qui fait fonctionner le dispositif en mode d'émission, que les données utiles embrouillées sont appliquées à l'ensemble d'insertion de bits ajoutés, que les données utiles qui y sont préparées sont appliquées à l'ensemble calculateur totalisateur de phase, dans lequel les données sont converties en quatre flux de données utiles parallèles, lesquels sont envoyés à la première jusqu'à la quatrième sortie (AW, AX, AY et AZ), que l'horloge de modulateur générée par l'ensemble calculateur totalisateur de phase est appliquée à une sortie supplémentaire ou cinquième sortie, que le fonctionnement dans le temps des ensembles mentionnés jusqu'ici est commandé par l'ensemble compteur de trame, que l'ensemble compteur de trame génère, en outre, l'horloge pourvue de lacunes pour la mémoire élastique située à l'extérieur de la pastille de matériau semi-conducteur, que cette horloge est susceptible d'être décalée à l'aide de signaux appliqués aux deuxièmes entrées (SELEC) et à la troisième entrée (TKP2), que le signal "1" est appliqué à la quatrième entrée (TEST1), ce qui met hors service l'ensemble de reconnaissance du mot de synchronisation, que le signal "0" est appliqué à la cinquième entrée (ZES), ce qui a pour effet que l'ensemble embrouilleur effectue l'embrouillage des données utiles et que l'ensemble compteur de trame produit les lacunes dans l'horloge pour la mémoire élastique, et que le signal "0" est appliqué à la sixième entrée (E), ce qui a pour effet d'amener l'ensemble d'insertion de bits ajoutés à insérer les bits ajoutés (S1 ... S4, M, K, R1 ... R8) et le bit de parité.

3. Dispositif selon la revendication 1, caractérisé en ce que, en mode d'émission d'un équipement intermédiaire, le signal "0" est appliqué à la dix-huitième entrée (SE), ce qui fait fonctionner le dispositif en mode d'émission et ce qui a pour effet que les données utiles amenées par la première entrée (DANS) sont envoyées inchangées à travers l'ensemble embrouilleur et l'ensemble d'insertion de dits ajoutés pour être appliquées de nouveau à la sixième entrée (DAB), que le signal "1" est appliqué à la sixième entrée (E) et à la septième entrée (S), ce qui empêche l'insertion de bits ajoutés, que le signal "1" est appliqué à la cinquième entrée (ZES), de sorte que l'ensemble compteur de trame délivre l'horloge pour la mémoire élastique sans lacunes et que l'embrouilleur est amené à ne pas embrouiller les données utiles et que le signal "1" est appliqué à la quatrième entrée (TEST1), de sorte que l'ensemble de reconnaissance du mot de synchronisation est mis hors service.

4. Dispositif selon les revendications 1 et 3, caractérisé en ce que, en mode d'émission d'un équipement intermédiaire avec synchronisation, le signal "0" est appliqué à la dix-huitième entrée (SE), ce qui fait fonctionner le dispositif en mode d'émission, que le signal "1" est appliqué à la sixième entrée (E) et le signal "0" est appliqué à la septième entrée (S), avec le résultat que des bits ajoutés déterminés (S1 ... S4, K) sont insérés ou sont laissés en place en fonction du signal "0" ou "1" appliqué à la huitième jusqu'à la douzième entrée (STv) et que le signal "0" est appliqué à la quatrième entrée (TEST1), de sorte que l'ensemble de reconnaissance du mot de synchronisation est mis en service.

5. Dispositif selon la revendication 1, caractérisé en ce que, en mode de réception d'un équipement terminal, le signal "1" est appliqué à la dix-huitième entrée (SE), ce qui fait fonctionner le dispositif en mode de réception, et les données utiles sont appliquées à la treizième jusqu'à la seizième entrée (EW, EX, EY et EZ), que l'ensemble calculateur de différence de phase est commandé de l'extérieur à travers la deuxième entrée (SELEC) et que cet ensemble produit de nouveau, à partir des quatre flux de données utiles parallèles, un flux de données utiles sérielles, que ce flux sériel est envoyé d'une part à l'ensemble débrouilleur et d'autre part à l'ensemble éliminateur de bits ajoutés, que le signal "1" est appliqué à la septième entrée (S), avec le résultat que des bits ajoutés déterminés (S1 ... S4, K, M) sont éliminés du flux de données utiles et que le contrôle de parité est effectué, que le signal "0" est appliqué à la cinquième entrée (ZES), de sorte que l'ensemble compteur de trame délivre l'horloge pour la mémoire élastique avec des lacunes et que le débrouilleur est amené à débrouiller les données utiles, et que le signal "0" est appliqué à la dix-septième entrée (AUSW), de sorte que les données utiles débrouillées sont appliquées à la sixième sortie (DAB).

6. Dispositif selon la revendication 1, caractérisé en ce que, en mode de réception d'un équipement intermédiaire, le signal "1" est appliqué à la dix-huitième entrée (SE), ce qui fait fonctionner le dispositif en mode de réception, et les données utiles sont appliquées à la treizième jusqu'à la seizième entrée (EW, EX, EY et EZ) et sont amenées à l'ensemble calculateur de différence de phase, que l'ensemble calculateur de différence de phase est commandé de l'extérieur à travers la deuxième entrée (SELEC) et que cet ensemble produit de nouveau, à partir des quatre flux de données utiles parallèles, un flux de données utiles sérielles, que le signal "0" est appliqué à la septième entrée (S), avec le résultat que des bits ajoutés déterminés (S1 ... S4, K) sont insérés ou sont laissés en place en fonction du signal "0" ou "1" appliqué à la huitième jusqu'à la douzième entrée (STv), que le signal "1" est appliqué à la cinquième entrée (ZES), de sorte que l'ensemble compteur de trame délivre l'horloge pour la mémoire élastique sans lacunes, et que le signal "1" est appliqué à la dix-septième entrée (AUSW), de sorte que les données utiles venant de l'ensemble éliminateur de bits ajoutés sont amenées directement à la sixième sortie (DAB).

7. Dispositif selon la revendication 5 ou 6, caractérisé en ce que le signal "0" est appliqué à la treizième jusqu'à la seizième entrée (EW, EX, EY et EZ), de sorte que l'ensemble calculateur de différence de phase est mis hors service, et que les données utiles préparées à l'extérieur par un autre ensemble calculateur de différence de phase sont appliquées à la première entrée (DANS).

FIG. 1

FIG. 2